# EUROPÄISCHE PATENTANMELDUNG

(11) **EP 1 605 237 A1**
(43) Veröffentlichungstag der Anmeldung: **14.12.2005**
(21) Anmeldenummer: 04013314.2
(22) Anmeldetag: 05.06.2004
(51) Int. Cl.: G01J 1/42, B23K 26/00

(54) **Laserbearbeitungsmaschine mit Strahldiagnosevorrichtung sowie entsprechendes Verfahren zur Bestimmung wenigstens eines Strahlkenndatums eines Laserstrahls**

(71) Anmelder: TRUMPF Werkzeugmaschinen GmbH + Co. KG, 71254 Ditzingen (DE)
(72) Erfinder: Horn, Armin, 71272 Renningen (DE)
(74) Vertreter: Kohler Schmid Möbus

(57) **Zusammenfassung**

Laserbearbeitungsmaschine mit Strahldiagnosevorrichtung sowie Verfahren zur Bestimmung wenigstens eines Strahlkenndatums eines Laserstrahls an einer Laserbearbeitungsmaschine.
In eine Laserbearbeitungsmaschine (1) zum Bearbeiten von Werkstücken ist eine Strahldiagnosevorrichtung (18) zur Bestimmung wenigstens eines Strahlkenndatums eines Laserstrahls (8) integriert. Dabei sind ein Strahlerfassungselement (20) der Strahldiagnosevorrichtung (18) sowie der Laserstrahl (8) mittels eines Funktionsantriebes der Laserbearbeitungsmaschine zur Strahldiagnose unter bereichsweiser Erfassung des Laserstrahlquerschnittes durch das Strahlerfassungselement (20) relativ zueinander in Strahlquerrichtung bewegbar. Zur Werkstückbearbeitung ist mittels des Funktionsantriebes eine Funktionseinheit (5) der Laserbearbeitungsmaschine (1) unter gegenseitiger Positionierung und/oder Bewegung des Laserstrahlfokus und des zu bearbeitenden Werkstückes bewegbar.

## Beschreibung

Die Erfindung betrifft eine Laserbearbeitungsmaschine zum Bearbeiten von Werkstücken, mit einer Funktionseinheit und einem Funktionsantrieb, mittels dessen unter Bewegung der zugeordneten Funktionseinheit der Strahlfokus eines Laserstrahls und ein Werkstück zur Werkstückbearbeitung relativ zueinander positionierbar und/oder bewegbar sind. Die Erfindung betrifft des Weiteren ein Verfahren zur Bestimmung wenigstens eines Strahlkenndatums eines Laserstrahls an einer Laserbearbeitungsmaschine, wobei zur Strahldiagnose ein Strahlerfassungselement einer Strahldiagnosevorrichtung sowie der Laserstrahl unter bereichsweiser Erfassung des Laserstrahlquerschnittes durch das Strahlerfassungselement relativ zueinander in Strahlquerrichtung bewegt werden.

Laserbearbeitungsmaschinen der eingangs genannten Art sind beispielsweise als Laserschneid- oder Laserschweißmaschinen in vielfältiger Ausführung bekannt. Beispielhaft zu nennen ist die in EP 1 083 019 A2 offenbarte Laserschneidmaschine. Zur Werkstückbearbeitung sind Relativbewegungen des Strahlfokus des als Bearbeitungswerkzeug eingesetzten Laserstrahls und des zu bearbeitenden Werkstückes auszuführen. Derartige Relativbewegungen können beispielsweise entlang der zu bearbeitenden Werkstückoberfläche aber auch - etwa zur Fokuslageneinstellung vor und während der Bearbeitung - quer zu der Werkstückoberfläche gerichtet sein. Zur Ausführung der bearbeitungsbedingten Relativbewegungen dienen im Falle des Standes der Technik Funktionsantriebe der Laserbearbeitungsmaschine, die in aller Regel numerisch gesteuert sind.

Außerdem bekannt sind Strahldiagnosevorrichtungen, mittels derer nach dem eingangs genannten Verfahren Strahlkenndaten eines Laserstrahls an einer Laserbearbeitungsmaschine bestimmt werden. Eine entsprechende Strahldiagnosevorrichtung wird von der Firma PROMETEC GmbH, 52070 Aachen, DE unter der Bezeichnung "LASERSCOPE UFF 100" vertrieben. Druckschriftlich offenbart sind eine Strahldiagnosevorrichtung sowie ein Strahldiagnoseverfahren der vorstehenden Art in DE 199 09 595 A1.

Bei den bekannten Strahldiagnosevorrichtungen handelt es sich um eigenständige Anordnungen, die selbständig funktionsfähig sind und die bei Bedarf an gleichfalls eigenständigen Laserbearbeitungsmaschinen zum Einsatz kommen.

Eine Vereinfachung der bestehenden Verhältnisse hat sich die vorliegende Erfindung zum Ziel gesetzt.

Erfindungsgemäß gelöst wird diese Aufgabe durch die Laserbearbeitungsmaschine nach Patentanspruch 1 sowie durch das Verfahren nach Patentanspruch 11.

Im Falle der Erfindung ist demnach eine Strahldiagnosevorrichtung in eine Laserbearbeitungsmaschine integriert. Die für die Strahldiagnose erforderliche Relativbewegung des betreffenden Laserstrahls und eines Strahlerfassungselementes der Strahldiagnosevorrichtung wird mittels eines Funktionsantriebes der Laserbearbeitungsmaschine ausgeführt. Dieser Funktionsantrieb dient ansonsten zur bearbeitungsbedingten Relativbewegung des Strahlfokus des Laserstrahls und des zu bearbeitenden Werkstükkes. Für die erfindungsgemäße Doppelnutzung kommen verschiedene Funktionsantriebe in Frage, die üblicherweise an Laserbearbeitungsmaschinen vorgesehen sind. Zu fordern ist lediglich die Möglichkeit einer gesteuerten Relativbewegung von Laserstrahl und Strahlerfassungselement der Strahldiagnosevorrichtung in Strahlquerrichtung. Erfindungsgemäß entfällt die Notwendigkeit, eine Laserbearbeitungsmaschine und eine Strahldiagnosevorrichtung zur Bestimmung von Strahlkenndaten als eigenständige Einheiten vorzusehen. Insbesondere der Anschaffungsaufwand für eine Laserbearbeitungsmaschine mit der Möglichkeit einer Laserstrahldiagnose reduziert sich folglich auf eine Minimum. Die Strahldiagnose stellt im Falle der Erfindung eine der Funktionen der betreffenden Laserbearbeitungsmaschine dar.

Besondere Ausführungsarten der Erfindung nach den Patentansprüchen 1 und 11 ergeben sich aus den abhängigen Patentansprüchen 2 bis 10.

Die in Patentanspruch 2 beschriebene Bauart der erfindungsgemäßen Laserbearbeitungsmaschine zeichnet sich durch einen besonders hohen Integrationsgrad aus. Im Falle dieser Laserbearbeitungsmaschine werden nicht nur die mechanischen Komponenten eines Funktionsantriebes der Laserbearbeitungsmaschine sondern darüber hinaus auch Bestandteile der zugehörigen numerischen Steuerung doppelt genutzt. Sowohl zur Steuerung der bearbeitungsbedingten Relativbewegung von Laserstrahlfokus und Werkstück als auch zur Steuerung der Relativbewegung eines Strahlerfassungselementes der Strahldiagnosevorrichtung und des Laserstrahls muss die Position des Laserstrahls in einem Bezugssystem der Laserbearbeitungsmaschine definiert und bekannt sein. An der Laserbearbeitungsmaschine nach Patentanspruch 2 werden die Positionsinformationen für beide Relativbewegungen von ein und demselben Steuerungsbaustein bereitgestellt.

Ausweislich Patentanspruch 3 werden mittels des Funktionsantriebes der Laserbearbeitungsmaschine in Weiterbildung der Erfindung ein Strahlerfassungselement der Strahldiagnosevorrichtung und der in einem noch nicht abschließend fokussierten Zustand befindliche Laserstrahl relativ zueinander bewegt. Diese Maßnahme bietet den Vorteil, dass das eingesetzte Strahlerfassungselement lediglich verhältnismäßig niedrigen Temperaturen ausgesetzt ist.

Demgegenüber wird im Falle der Maschinenbauart nach Patentanspruch 4 der abschließend fokussierte Laserstrahl erfasst. Die benötigten Strahlkenndaten werden bei demjenigen Zustand des Laserstrahls bestimmt, in welchem der Laserstrahl zur Werkstückbearbeitung auf das betreffende Werkstück auftrifft. Das Ergebnis der durchgeführten Strahldiagnose gibt folglich die an der Bearbeitungsstelle tatsächlich herrschenden Verhältnisse wieder.

Zur Vermeidung von temperaturbedingten Beschädigungen des Strahlerfassungselementes ist gemäß Patentanspruch 5 vorgesehen, dass der Strahlquerschnitt des abschließend fokussierten Laserstrahls von dem Strahlerfassungselement der Strahldiagnosevorrichtung bei leistungsreduzierter Laserstrahlquelle erfasst wird.

Ausweislich Patentanspruch 6 wird im Falle einer bevorzugten Bauart der erfindungsgemäßen Laserbearbeitungsmaschine zur Strahldiagnose ein Funktionsantrieb verwendet, der ansonsten einen Laserbearbeitungskopf relativ zu dem zu bearbeitenden Werkstück bewegt. Mittels dieses Funktionsantriebes sind in einer Vielzahl von Fällen auch mehrachsige Bewegungen ausführbar. Entsprechend den hohen Genauigkeitsanforderungen an die Werkstückbearbeitung ist auch bei der Strahldiagnose eine hochgenaue Bewegung des betreffenden Laserstrahls relativ zu dem Strahlerfassungselement der Strahldiagnosevorrichtung gewährleistet. Gleichermaßen exakt stellt sich das Ergebnis der Strahldiagnose dar.

Im Falle der Erfindungsbauart nach Patentanspruch 7 ist das Strahlerfassungselement der Strahldiagnosevorrichtung zweckmäßigerweise außerhalb des Arbeitsbereiches des Laserbearbeitungskopfes ortsfest angeordnet.

In kinematischer Umkehrung der Verhältnisse gemäß Patentanspruch 6 werden an der erfindungsgemäßen Laserbearbeitungsmaschine nach Patentanspruch 8 die Bewegungsmöglichkeiten einer das Werkstück bei der Bearbeitung lagernden Werkstücklagerung zur Strahldiagnose genutzt. Ein Strahlerfassungselement der Strahldiagnosevorrichtung wird gemeinschaftlich mit der Werkstücklagerung relativ zu dem Laserstrahl bewegt. Diese Maßnahme ist insoweit vorteilhaft, als sich der betreffende Laserstrahl während der gesamten Strahldiagnose in einem einheitlichen Zustand befindet. Zustandsänderungen, die sich bei Bewegung des Laserstrahls etwa infolge von mit der Bewegung verbundenen Anpassungen der Laserstrahlführung ergeben könnten, werden vermieden.

Patentanspruch 9 beschreibt eine Ausführungsform der erfindungsgemäßen Laserbearbeitungsmaschine mit einer Strahldiagnosevorrichtung, die eine Bestimmung von in der betrieblichen Praxis häufig benötigten Strahlkenndaten gestattet.

Ausweislich Patentanspruch 10 ist in bevorzugter Ausgestaltung der Erfindung als Strahlerfassungselement ein Temperatursensor vorgesehen. Anhand der Temperaturverhältnisse ist ein Rückschluss auf eine Vielzahl von Laserstrahlmerkmalen möglich.

Nachstehend wird die Erfindung anhand stark schematisierter Darstellungen zu einem Ausführungsbeispiel näher erläutert. Es zeigen:
- Fig. 1: eine Laserschneidmaschine mit Strahldiagnosevorrichtung bei der Werkstückbearbeitung,
- Fig. 2: die Laserschneidmaschine nach Fig. 1 bei der Strahldiagnose und
- Fig. 3: eine Sensoranordnung der Strahldiagnosevorrichtung nach den Fign. 1 und 2.

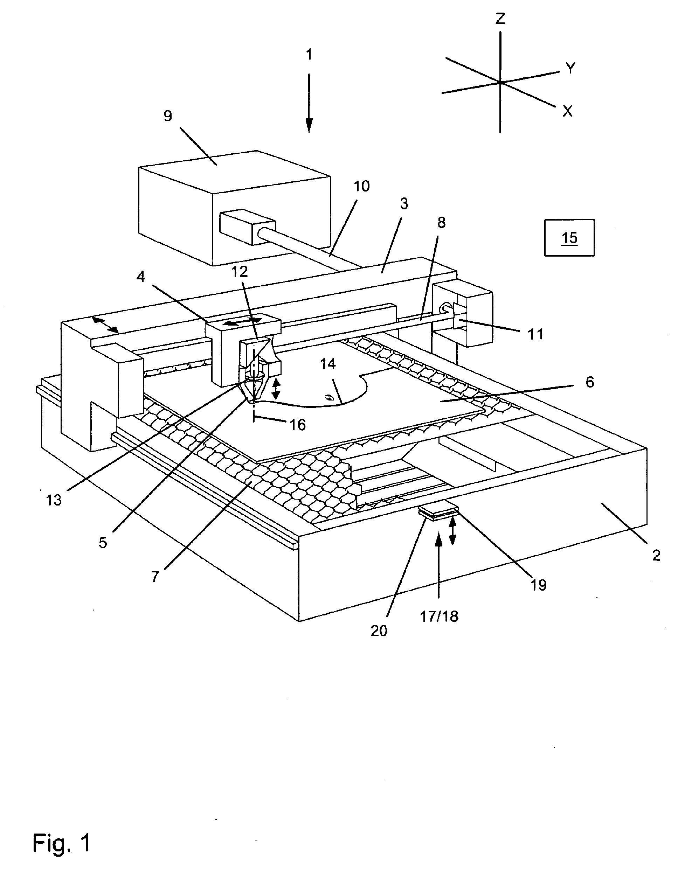

Ausweislich Fig. 1 besitzt eine als Laserschneidmaschine 1 ausgebildete Laserbearbeitungsmaschine ein Maschinenbett 2, an welchem eine Maschinenbrücke 3 in einer ersten Achsrichtung (x-Richtung) verfahrbar geführt ist. Die Maschinenbrücke 3 lagert ihrerseits an einem Querträger einen Führungsschlitten 4 mit einem aufgebrochen dargestellten Laserbearbeitüngs- bzw. Laserschneidkopf 5 als Funktionseinheit. Gemeinschaftlich mit dem Führungsschlitten 4 ist der Laserschneidkopf 5 in einer zweiten Achsrichtung (y-Richtung) an dem Querträger der Maschinenbrücke 3 entlang verfahrbar. Darüber hinaus ist der Laserschneidkopf 5 relativ zu dem Führungsschlitten 4 in einer dritten Achsrichtung (z-Richtung) beweglich. Unterhalb des Laserschneidkopfs 5 ist ein Werkstück in Form eines Bleches 6 auf einer im Innern des Maschinenbettes 2 angeordneten Werkstückauflage 7 gelagert.

Zur Bearbeitung des Bleches 6 dient ein Laserstrahl 8, der von einer Laserstrahlquelle 9 erzeugt wird. Ausgehend von der Laserstrahlquelle 9 verläuft der Laserstrahl 8 durch ein Strahlführungsrohr 10 zu der Maschinenbrücke 3. Mittels eines dort angebrachten ersten Umlenkspiegels 11 wird der Laserstrahl 8 parallel zu dem Querträger der Maschinenbrücke 3 zu einem zweiten Umlenkspiegel 12 an dem Führungsschlitten 4 umgelenkt. Der zweite Umlenkspiegel 12 reflektiert den Laserstrahl 8 zu einer Fokussierlinse 13, welche den Laserstrahl 8 bündelt und als Bearbeitungsstrahl auf das Blech 6 richtet. Infolge der Verfahrbarkeit der Maschinenbrücke 3 in x-Richtung und des Führungsschlittens 4 in y-Richtung kann mit dem Laserstrahl 8 jeder beliebige Punkt an dem Blech 6 angefahren werden. Ein in dem gezeigten Beispielsfall an dem Blech 6 erstellter Schnitt 14 ist in Fig. 1 angedeutet. Die Beweglichkeit des Laserschneidkopfs 5 in z-Richtung wird zur Einstellung der Fokuslage des Laserstrahls 8 in Blechquerrichtung genutzt. Eine derartige Fokuslageneinstellung kann vor Beginn der Werkstückbearbeitung, aber auch im laufenden Schneidbetrieb erfolgen.

Zum Bewegen des Laserschneidkopfs 5 in den drei Richtungen des Raumes dient ein motorischer Funktionsantrieb mit einer numerischen Steuerung 15. Mittels der numerischen Steuerung 15 werden Antriebseinrichtungen zur Bewegung der Maschinenbrücke 3 in x-Richtung, Antriebseinrichtungen zur Bewegung des Führungsschlittens 4 in y-Richtung sowie Antriebseinrichtungen zur Bewegung des Laserschneidkopfs 5 in z-Richtung aufeinander abgestimmt gesteuert. Auch die übrigen Funktionen der Laserschneidmaschine 1 sind steuerungsbezogen in die numerische Steuerung 15 integriert.

An einem Längsende des Maschinenbettes 2 ist außerhalb des Arbeitsbereiches des Laserschneidkopfes 5 eine Sensoranordnung 17 einer Strahldiagnosevorrichtung 18 angebracht. Die Position der Sensoranordnung 17 in dem durch die x-, die y- und die z-Achse festgelegten Bezugssystem der Laserschneidmaschine 1 ist definiert.

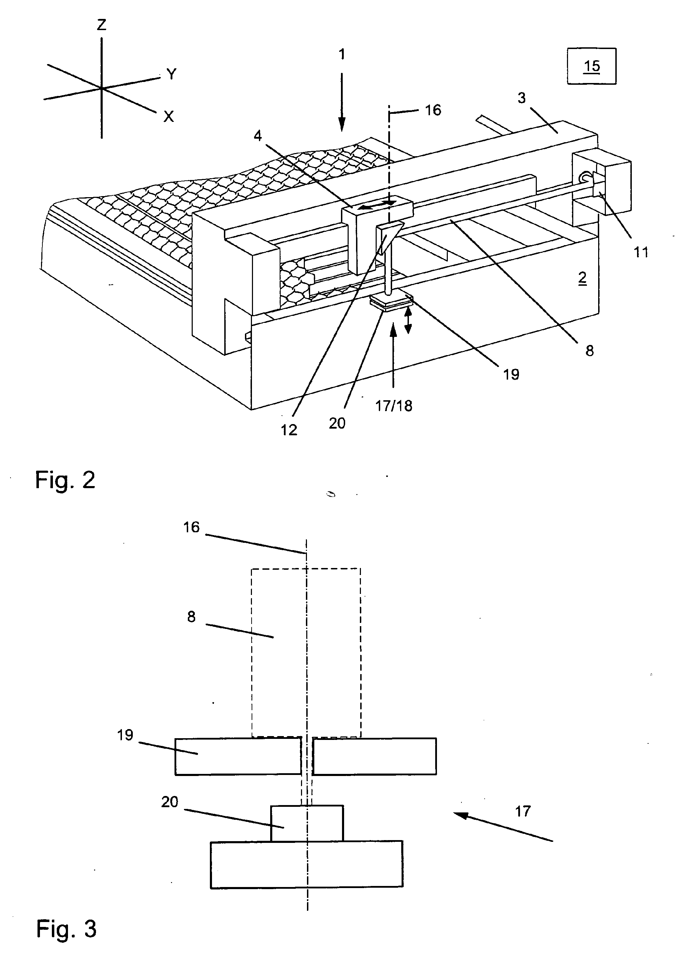

Wie im Einzelnen aus Fig. 3 hervorgeht, umfasst die Sensoranordnung 17 eine gekühlte Lochblende 19 sowie einen darunter angeordneten Temperatursensor 20 als Strahlerfassungselement. Der Temperatursensor 20 steht mit einer Auswerteeinrichtung der Strahldiagnosevorrichtung 18 in Verbindung, die ihrerseits in die numerische Steuerung 15 der Laserschneidmaschine 1 integriert ist. An dem Maschinenbett 2 ist die Sensoranordnung 17 in z-Richtung verstellbar.

Mittels der Strahldiagnosevorrichtung 18 lassen sich verschiedene Strahlkenndaten des Laserstrahls 8 bestimmen. Zu diesen Strahlkenndaten gehören u.a. die Strahlintensitätsverteilung im Querschnitt des Laserstrahls 8 sowie die Lage des senkrecht verlaufenden Abschnittes des Laserstrahls 8 bzw. der Strahlachse 16 im Raum.

Zur Durchführung der Strahldiagnose wird die Maschinenbrücke 3 mit dem Führungsschlitten 4 und dem Laserschneidkopf 5 mittels des betreffenden Antriebes an das mit der Sensoranordnung 17 versehene Ende des Maschinenbettes 2 verfahren. Dort wird der Laserschneidkopf 5 einschließlich der Fokussierlinse 13 demontiert. Im dem sich infolgedessen ergebenden nicht abschließend fokussierten Zustand wird der Laserstrahl 8 mittels des zweiten Umlenkspiegels 12 an dem Führungsschlitten 4 auf die Sensoranordnung 17 gerichtet (Fig. 2).

Durch Verfahren der Maschinenbrücke 3 und des Führungsschlittens 4 wird der Laserstrahl 8 in x- und in y-Richtung über die Öffnung der Lochblende 19 geführt. Der Öffnungsquerschnitt der Lochblende 19 ist kleiner als der Querschnitt des Laserstrahls 8. Durch die Öffnung der Lochblende 19 gelangt folglich jeweils nur ein Bereich des Strahlquerschnittes auf den Temperatursensor 20. Der Temperatursensor 20 scannt demnach den Strahlquerschnitt des Laserstrahls 8 bereichsweise.

Mittels der Auswerteeinrichtung der Strahldiagnosevorrichtung 18 wird jedem erfassten und lagedefinierten Querschnittsbereich des Laserstrahls 8 die dort festgestellte Temperatur zugeordnet. Die einzelnen Querschnittsbereiche mit den jeweiligen Temperaturen werden dann zu dem Strahl-Gesamtquerschnitt mit dem sich über diesen einstellenden Temperaturprofil zusammengesetzt. Auf diesem Wege wird die Strahlintensitätsverteilung im Querschnitt des Laserstrahls 8 bestimmt.

Durch Scannen des Laserstrahls 8 mittels des Temperatursensors 20 lässt sich von der Auswerteeinrichtung der Strahldiagnosevorrichtung 18 auch die Lage des Laserstrahlquerschnittes in der Ebene des Temperatursensors 20 ermitteln. Wird nun die Position der Ebene des Temperatursensors 20 durch Anheben oder Absenken der Sensoranordnung 17 in z-Richtung verändert, so kann durch erneutes Scannen des Laserstrahls 8 auch die Lage des Laserstrahlquerschnittes in dieser Ebene bestimmt werden. Die Größe des Versatzes der beiden Ebenen des Temperatursensors 20 in z-Richtung ist bekannt. Aus dem Versatz der in den beiden Ebenen des Temperatursensors 20 erfassten Querschnitte des Laserstrahls 8 in der x- und/oder in der y-Richtung kann unter Einbeziehung des dem Versatz der Ebenen des Temperatursensors 20 entsprechenden gegenseitigen Versatzes der Strahlquerschnitte in z-Richtung die Lage der Strahlachse 16 im Raum bestimmt werden.

Genutzt werden die mittels der Strahldiagnosevorrichtung 18 gewonnenen Erkenntnisse zur Optimierung der mit der Laserschneidmaschine 1 durchgeführten Werkstückbearbeitungen.

## Patentansprüche

1. Laserbearbeitungsmaschine zum Bearbeiten von Werkstücken, mit einer Funktionseinheit (5) und einem Funktionsantrieb, mittels dessen unter Bewegung der zugeordneten Funktionseinheit (5) der Strahlfokus eines Laserstrahls (8) und ein Werkstück zur Werkstückbearbeitung relativ zueinander positionierbar und/oder bewegbar sind, **dadurch gekennzeichnet, dass** in die Laserbearbeitungsmaschine (1) eine Strahldiagnosevorrichtung (18) zur Bestimmung wenigstens eines Strahlkenndatums des Laserstrahls (8) integriert ist, indem mittels des Funktionsantriebes der Laserbearbeitungsmaschine (1) ein Strahlerfassungselement (20) der Strahldiagnosevorrichtung (18) sowie der Laserstrahl (8) zur Strahldiagnose unter bereichsweiser Erfassung des Laserstrahlquerschnittes durch das Strahlerfassungselement (20) relativ zueinander in Strahlquerrichtung bewegbar sind.

2. Laserbearbeitungsmaschine nach Anspruch 1, **dadurch gekennzeichnet, dass** für den Funktionsantrieb der Laserbearbeitungsmaschine (1) eine numerische Steuerung (15) vorgesehen ist, die eine Einrichtung zur Erfassung der Position(en) des Laserstrahls (8) in einem Maschinen-Bezugssystem umfasst und die auf der Grundlage der erfassten Position(en) des Laserstrahls (8) in dem Maschinen-Bezugssystem den Funktionsantrieb zur Ausführung einer Relativbewegung von Strahlfokus und Werkstück zur Werkstückbearbeitung sowie zur Ausführung einer Relativbewegung von Laserstrahl (8) und Strahlerfassungselement (20) zur Strahldiagnose steuert.

3. Laserbearbeitungsmaschine nach einem der vorhergehenden Ansprüche, **dadurch gekennzeichnet, dass** mittels des Funktionsantriebes der Laserbearbeitungsmaschine (1) ein Strahlerfassungselement (20) der Strahldiagnosevorrichtung (18) und der in einem noch nicht abschließend fokussierten Zustand befindliche Laserstrahl (8) zur Strahldiagnose relativ zueinander in Strahlquerrichtung bewegbar sind.

4. Laserbearbeitungsmaschine nach einem der vorhergehenden Ansprüche, **dadurch gekennzeichnet, dass** mittels des Funktionsantriebes der Laserbearbeitungsmaschine (1) ein Strahlerfassungselement (20) der Strahldiagnosevorrichtung (18) und der in einem Bearbeitungszustand befindliche Laserstrahl (8) zur Strahldiagnose relativ zueinander in Strahlquerrichtung bewegbar sind.

5. Laserbearbeitungsmaschine nach einem der vorhergehenden Ansprüche, **dadurch gekennzeichnet, dass** mittels des Funktionsantriebes der Laserbearbeitungsmaschine (1) ein Strahlerfassungselement (20) der Strahldiagnosevorrichtung (18) und der in einem Bearbeitungszustand befindliche Laserstrahl (8) zur Strahldiagnose bei leistungsreduzierter Laserstrahlquelle (9) relativ zueinander in Strahlquerrichtung bewegbar sind.

6. Laserbearbeitungsmaschine nach einem der vorhergehenden Ansprüche, **dadurch gekennzeichnet, dass** als Funktionsantrieb zur Relativbewegung eines Strahlerfassungselementes (20) der Strahldiagnosevorrichtung (18) und des Laserstrahls (8) ein Funktionsantrieb der Laserbearbeitungsmaschine (1) vorgesehen ist, mittels dessen zur Werkstückbearbeitung als Funktionseinheit (5) ein Laserbearbeitungskopf relativ zu einem Werkstück bewegbar ist und mittels dessen zur Strahldiagnose der Laserstrahl (8) relativ zu dem Strahlerfassungselement (20) der Strahldiagnosevorrichtung (18) in Strahlquerrichtung bewegbar ist.

7. Laserbearbeitungsmaschine nach einem der vorhergehenden Ansprüche, **dadurch gekennzeichnet, dass** das Strahlerfassungselement (20) der Strahldiagnosevorrichtung (18) außerhalb des Arbeitsbereichs des Laserbearbeitungskopfes ortsfest angeordnet ist.

8. Laserbearbeitungsmaschine nach einem der vorhergehenden Ansprüche, **dadurch gekennzeichnet, dass** als Funktionsantrieb zur Relativbewegung eines Strahlerfassungselementes (20) der Strahldiagnosevorrichtung (18) und des Laserstrahls (8) ein Funktionsantrieb der Laserbearbeitungsmaschine (1) vorgesehen ist, mittels dessen zur Werkstückbearbeitung als Funktionseinheit eine Werkstücklagerung relativ zu einem Laserbearbeitungskopf bewegbar ist und mittels dessen zur Strahldiagnose das Strahlerfassungselement (20) der Strahldiagnosevorrichtung (18) relativ zu dem Laserstrahl (8) in Strahlquerrichtung bewegbar ist.

9. Laserbearbeitungsmaschine nach einem der vorhergehenden Ansprüche, **dadurch gekennzeichnet, dass** als Strahldiagnosevorrichtung (18) eine Strahldiagnosevorrichtung (18) zur Bestimmung des Strahlprofils und/oder der Strahlintensitätsverteilung im Laserstrahlquerschnitt und/oder der Laserstrahllage und/oder der Laserleistung vorgesehen ist.

10. Laserbearbeitungsmaschine nach einem der vorhergehenden Ansprüche, **dadurch gekennzeichnet, dass** als Strahlerfassungselement (20) ein Temperatursensor vorgesehen ist.

11. Verfahren zur Bestimmung wenigstens eines Strahlkenndatums eines Laserstrahls (8) an einer Laserbearbeitungsmaschine (1), wobei zur Strahldiagnose ein Strahlerfassungselement (20) einer Strahldiagnosevorrichtung (18) sowie der Laserstrahl (8) unter bereichsweiser Erfassung des Laserstrahlquerschnittes durch das Strahlerfassungselement (20) relativ zueinander in Strahlquerrichtung bewegt werden, **dadurch gekennzeichnet, dass** das Strahlerfassungselement (20) der Strahldiagnosevorrichtung (18) und der Laserstrahl (8) mittels eines Funktionsantriebes der Laserbearbeitungsmaschine (1) unter bereichsweiser Erfassung des Laserstrahlquerschnittes durch das Strahlerfassungselement (20) relativ zueinander in Strahlquerrichtung bewegt werden, wobei mittels des genannten Funktionsantriebes zur Werkstückbearbeitung eine zugeordnete Funktionseinheit (5) der Laserbearbeitungsmaschine (1) unter gegenseitiger Positionierung und/oder Bewegung des Strahlfokus des Laserstrahls (8) und eines Werkstücks bewegt wird.
